# EUROPEAN PATENT APPLICATION

(11) **EP 4 606 726 A1**
(43) Date of publication of application: **27.08.2025**
(21) Application number: 24158625.4
(22) Date of filing: 20.02.2024
(51) Int. Cl.: B65D 35/08, B32B 1/08, B32B 27/30, B32B 27/32

(54) **FLEXIBLE TUBE CONTAINER**

(71) Applicant: ALBEA SERVICES, 92230 Gennevilliers (FR)
(72) Inventor: MUTHA, Nitin, 92230 Gennevilliers (FR); NEUBERGER, Arthur, 92230 Gennevilliers (FR); LIEB, Holger, 92230 Gennevilliers (FR); DIPPOLD, Wilhelm, 92230 Gennevilliers (FR)
(74) Representative: Gevers & Orès

(57) **Abstract**

A flexible tube container comprising a tube head and a skirt, the skirt being formed from an extruded multilayered tube (200), the extruded multilayered tube (200) comprising an inner layer (30) made of polyethylene, an outer layer (40) made of polyethylene and at least two barrier layers (50), the at least two barrier layers being spaced of at least 40 µm.

## Description

The invention relates to a flexible tube container, also call squeezable tube container, formed from an extruded multilayered tube. Said tube containers are designed to store and distribute liquid to pasty products.

These flexible tube containers include a head and a flexible skirt obtained from a multi-layer material including several layers of different material.

In the case of cosmetic packaging industry, multi-layer packages are widely used as they represent advantages in terms of product protection and mechanical properties.

In some cases, it may even be necessary to use high barrier tube containers, i.e., containers with highly developed and efficient properties preventing light, gas, odors, flavors, water vapor, and water from permeating.

The high barrier property can be obtained by using several barrier layers, for example two barrier layers in ethylene-vinyl alcohol (EVOH), or two barrier layers in aluminum or even one barrier layer of each type.

It is also possible to add filler and/or nano particles to the layers to enhance the barrier property.

The aluminum barriers are efficient, but unfortunately their use presents a problem for recycling the multi-layer materials, as the plastic materials and aluminum cannot be easily separated and sorted into separate recycling channels.

EVOH is also efficient but is known for its sensitivity to humidity and its progressive deterioration leading to a loss of reliability of the barrier layer. The oxygen barrier property reduces significantly when the EVOH barrier layer is exposed to moisture/humidity.

Classically, these high barrier tube containers can be obtained by collapsible bubble extrusion blown process, or also by lamination process by assembling several layers together.

However, in this type of high barrier tube containers, we very often encounter problems with delamination of the layers, in particular due to the use of different types of materials to obtain the expected properties.

Furthermore, these methods involve the use of a flat multi-layer sheet structure that is wound in length direction to obtain the flexible skirt. The winding is done such that the flat sheet is given a cylindrical shape. The side edges of the flat sheet are overlapped or put edge-to-edge then welded while forming a longitudinal weld or join or seam.

The tube head, including a dispensing orifice, is next welded to one end of the flexible skirt. The tube containers are filled by pouring the product through the opposite open end provided with the head. Once the tube is filled, its open end is flattened, then welded.

The disadvantage of these methods is the presence of the longitudinal weld which can be unsightly, lead to additional risks of leaks and complicate the exterior decoration.

The present invention attempts to solve at least one of the above-mentioned problems and propose a flexible tube container comprising a tube head and a skirt, the skirt being formed from an extruded multilayered tube, the extruded multilayered tube comprising an inner layer made of polyethylene, an outer layer made of polyethylene and at least two barrier layers, the at least two barrier layers being spaced of at least 40 µm.

In other words, the skirt is obtained directly in the shape of a tube by extrusion of a plurality of layers. The risks of leaks are thus reduced, and the decoration can also be easily done all around the skirt without having to avoid a zone of welding. Moreover, the distance between the two barrier layers improves the moisture/humidity resistance of barrier layers. The barrier properties of the skirt are improved and prevent light, gas, odors, flavors, water vapor, and water from permeating.

The invention can also comprise any of the following features taken individually or in any technically possible combination:
- the extruded multilayered tube is exempt from a longitudinal weld or joint or seam,
- the at least two barrier layers are spaced by at least one separating layer comprising polyethylene,
- the polyethylene of the inner layer, and/or of the outer layer and/or the seprating layer is PCR polyethylene,
- the polyethylene of the separating layer is HDPE,
- the at least one separating layer comprises tie-layer resin,
- the tie-layer resin is an anhydride modified ethylene acrylate resin,
- the tie-layer resin is maleic anhydride grafted LLDPE,
- the at least one separating layer comprises a mixture of polyethylene and tie-layer resin,
- the at least one separating layer comprises between 60% and 95% of polyethylene,
- the at least one separating layer comprises between 5% and 40% of tie-layer resin,
- the at least two barrier layers are made of EVOH,
- the EVOH is EVOH with an ethylene content less than 32 mol%.
- the total thickness of the extruded multilayered tube is comprised between 250 and 500 µm,
- the total thickness of the extruded multilayered tube is comprised between 300 and 450 µm,
- the total thickness of the extruded multilayered tube is comprised between 300 and 400 µm,
- the thickness of the separating layer is comprised between 40 and 130 µm,
- the thickness of the separating layer is comprised between 40 and 110 µm,
- the thickness of the separating layer is comprised between 50 and 70 µm,
- the extruded multilayered tube comprises tie layer between the outer layer and one of the at least two the barrier layer,
- the extruded multilayered tube comprises tie layer between the inner layer and one of the at least two the barrier layer,
- the thickness of the inner layer is comprised between 50 and 200 µm,
- the thickness of the inner layer is comprised between 100 and 150 µm,
- the thickness of the outer layer is comprised between 50 and 200 µm,
- the thickness of the outer layer is comprised between 100 and 150 µm,
- the thickness of each of the barrier layer is between 5 µm and 20 µm,
- the thickness of each of the barrier layer is between 7 µm and 15 µm,
- the thickness of each of the tie layer is between 5 µm and 20 µm,
- the thickness of each of the tie layer is between 7 µm and 15 µm.

The invention will be better understood thanks to the following description which is only indicative, and which is not intended to limit said invention, accompanied with the following figures:
Figure 1 is a schematic representation of a flexible tube container according to an embodiment of the present invention,
Figure 2 is a sectional view of part of figure 1,
Figure 3 is a schematic representation of a flexible tube container according to a second embodiment of the present invention,
Figure 4 is a schematic representation of a flexible tube container according to another embodiment of the present invention,
Figure 5 is a schematic representation of a flexible tube container according to another embodiment of the present invention,
Figure 6 is a schematic cross section diagram of the layers that form the extruded multilayered tube according to an example of the present invention.

In the context of the invention, the following definitions and abbreviations are used.

As used herein, the terms "outer", "inner", "upper" and "lower", and the like, used with respect to the various layers refer to the laminated material with the intended outer or upper surface uppermost and the intended inner or lower (product-contacting) surface lowermost. In addition, these terms and the terms "over", "under" or "on" do not imply that the layers are necessarily directly in contact. For example, the upper layer being "formed on" the barrier layer does not preclude the presence of one or more other intervening layers located between the upper layer and the barrier layer. Furthermore, layers may be provided under the inner layer, i.e., between the inner layer and the product, or above the outer layer (like decorative layers).

The term "container" is used herein to refer to an item which may contain a product. Such products are usually liquids, gels or pastes. Preferred containers include tubes and pouches. The container may further comprise a lid or a cap and, if necessary, attachment means for the lid or cap (such as a tube head or shoulder) before it forms a useful commercial container.

The term "flexible" as used herein describes a laminate or a container made thereof which can bend or be bent easily and which does not break (unless it is bent too much). Herein in connection with the containers the term flexible indicates that if the container is subjected to a force, for example, by being filled with a liquid, or by applying pressure with a finger or a hand, it will change its form without breaking. A flexible container can also be considered to be a "squeezable" container.

The term "tie layer" refers to a layer which is placed between two layers with the object of ensuring that the two layers are joined together.

The term "polymer" refers to a large molecule, or macromolecule, composed of many repeated subunits.

The term "polyolefin" refers to any of a class of polymers produced from a simple olefin as a monomer.

The term "PE" refers to polyethylene.

The term "HDPE" refers to high density polyethylene.

The term "LLDPE" refers to linear low density polyethylene.

The term "EVOH" refers to ethylene-vinyl alcohol.

The term PCR refers to Post-Consumer Recycled.

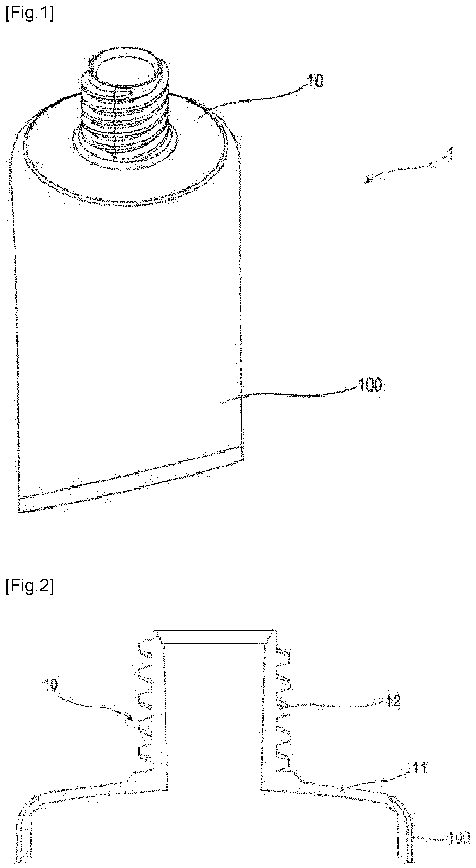

As illustrated in Figures 1 to 5, the invention relates to a flexible tube container 1 comprising a tube head 10 and a skirt 100.

The skirt 100 is formed from an extruded multilayered tube 200. In other words, the skirt 100 is obtained directly in the shape of a tube by extrusion of a plurality of layers, each layer being formed by an extruder charged with the corresponding material.

Layers with same composition can be formed from the same extruder or from different extruders.

For example, a seven layers extruded tube can be produced with four, five, six or seven extruders.

The extruded multilayered tube 200 is thus exempt from a longitudinal weld or joint or seam. The extruded multilayered tube 200 is also call a seamless tube.

The risks of leaks at the longitudinal weld are thus reduced. The external appearance of the flexible tube container is not messed up by a welding, often with the appearance of a blister of material. The decoration can also be easily done all around the skirt without having to avoid the longitudinal weld wherein the application of a decoration is generally delicate.

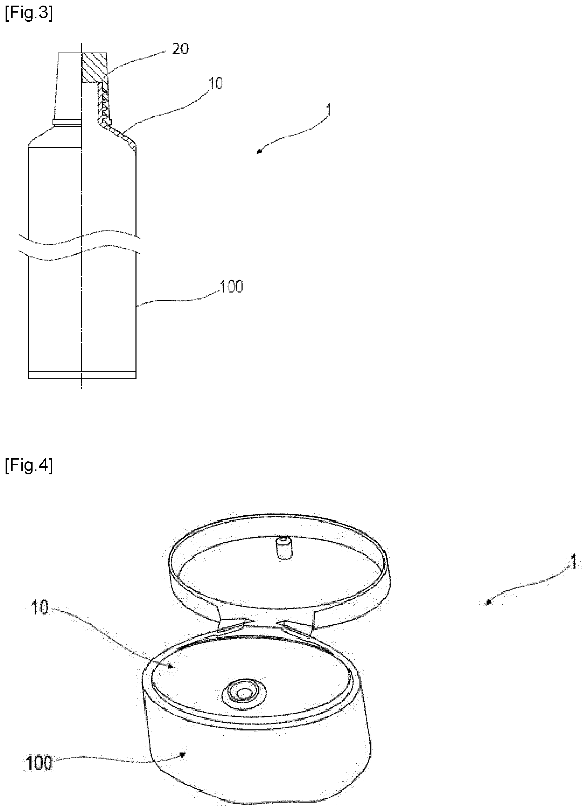

Advantageously, as represented at figure 3, the flexible tube container 1 can also comprise a cap 20.

The tube head 10 comprises a wall with a distribution opening and is attached or linked to the skirt 100. According to an embodiment illustrated in figures 1 to 3, the head 10 can comprise a shoulder 11 and a neck 12. The neck advantageously comprises thread. The cap can be screwed on the neck in order to block the distribution opening.

According to another embodiment not illustrated, the cap can be snapped (pushed) on the neck, the neck comprising snap function such as an annular rib cooperating with flanges or tabs of the cap.

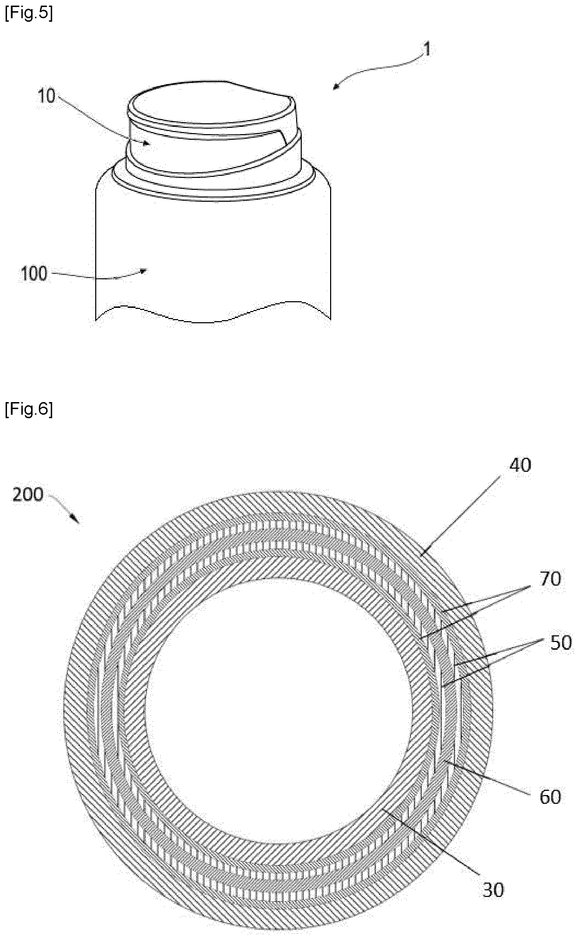

According to yet other embodiments represented at figures 4 and 5, the tube can comprise a head 10 with no neck. In this configuration, the head comprises only the wall with a distribution opening, this wall being attached directly to the skirt. This shoulder less configuration allows to reduce the quantity of material used to form the head.

According to an embodiment, the tube 1 can also comprise an insert located inside the container and attached to the internal surface of the tube head. In this case, the cap advantageously comprise a punch configured to pierce or cut the insert during the first use of the container. More advantageously, the container according to this embodiment comprises a ring mounted on the head. Said ring allows to maintain the cap in a first position, called waiting position, in which the pinch is kept at distance from the insert.

As represented in figures 2 and 3, said flexible tube skirt 100 is intended to be fixed to the tube head 10 in order to form the flexible tube container 1. The tube head 10 is advantageously overmoulded on the skirt 100. The skirt 100 is advantageously fixed to the shoulder periphery. Said tube head 10 is advantageously made of PE but can be made in any other suitable material such as PP (polypropylene). The tube head can be produced as a separate piece of plastic and then attached to the skirt by heating the edge of the shoulder and the edge of the skirt and compress them together.

An example of a structure of an extruded multilayered tube 200 according to the invention is illustrated at figure 6. It has to be noticed that the figure 6 is schematic representation and that the layers are not at scale.

The extruded multilayered tube 200 comprises an inner layer 30 made of PE, an outer layer 40 made of PE and at least two barrier layers 50. According to the invention, the at least two barrier layers are spaced of at least 40 µm.

As illustrated in figure 6, the barrier layers 50 are located between the inner layer 30 and the outer layer 40.

Said inner layer 30 can be composed by a plurality of single sub-layers. In the same way, said outer layer 40 can be composed by a plurality of single sub-layers. The number of single sub-layers composing the inner layer 30 and the outer layer 40 is not limited to the example illustrated in the figure 6.

The inner layer 30 and/or the outer layer 40 can comprise PCR polyethylene.

The PCR polyethylene is polyethylene from reprocessed plastics generated by households or commercial, industrial and institutional facilities in their role of end user, a material from a content that can no longer be used for the purpose for which it was designed, according to, for example, the definition of the ISO 14021:2016 standard.

The polyethylene of the inner layer 30 can be a mixture of PCR polyethylene and LLDPE, for example a mixture of 70% of PCR polyethylene and 30 % of LLDPE. The polyethylene of the outer layer 40 can be a mixture of PCR polyethylene and LLDPE, for example a mixture of 70% of PCR polyethylene and 30 % of LLDPE.

The thickness of each of the inner layer 30 and the outer layer 40 is comprised between 50 and 200 µm, preferably between 100 and 150 µm.

The at least two barrier layers 50 are preferably polymeric barrier layers, such as EVOH barrier layers. The EVOH can be an EVOH with an ethylene content less than 32 mol%.

Advantageously, the thickness of each of the barrier layer 50 is between 5 µm and 20 µm, preferably between 7 µm and 15 µm.

Advantageously, the at least two barrier layers 50 are spaced by at least one separating layer 60 comprising polyethylene.

The polyethylene of the separating layer can be a PCR polyethylene. Preferably, the polyethylene of the separating layer is HDPE.

HDPE helps to improve moisture barrier, which in-turn helps to improve the oxygen barrier of the barrier layers 50, such as EVOH barrier layers.

Advantageously, the at least one separating layer 60 can further comprise tie-layer resin. The tie-layer resin improves adhesion between the two barrier layers 50.

The tie-layer resin can be an anhydride modified ethylene acrylate resin, such as maleic anhydride grafted LLDPE.

Advantageously, the at least one separating layer 60 comprises a mixture of polyethylene and tie-layer resin, for example between 60% and 95% of polyethylene and between 5% and 40% of tie-layer resin.

Advantageously, the thickness of the separating layer 60 is comprised between 40 and 130 µm, preferably between 40 and 110µm, more preferably between 50 and 70 µm.

Advantageously, the extruded multilayered tube 200 comprises a tie layer 70 between the barrier layer 50 and the inner layer 30 and/or between the barrier layer 50 and the outer layer 40. Said tie layer 70 is used to connect the inner layer 30 and barrier layer 50 as well as the outer layer 40 and the barrier layer 50 and to prevent any delamination problems.

Advantageously, the tie layers 70 are an anhydride modified ethylene acrylate resin, such as maleic anhydride grafted LLDPE.

The tie layers can also comprise a PCR polyethylene.

The tie layers can be a mixture of PCR polyethylene and a tie-layer resin, for example a mixture of 80% of PCR polyethylene and 20 % of tie-layer resin, or a mixture of 70% of PCR polyethylene and 30 % of tie layer-resin.

The tie-layer resin can be, for example an anhydride modified ethylene acrylate resin, such as maleic anhydride grafted LLDPE.

Advantageously, the thickness of each of the tie layer 70 is between 5 µm and 20 µm, preferably between 7 µm and 15 µm.

Advantageously, the total thickness of the extruded multilayered tube 200 is between 250 and 500 µm, preferably between 300 and 450 µm, more preferably between 300 and 400 µm. Such thickness is well adapted for forming flexible tube, in particular flexible tube containers for cosmetic product.

The following structures are examples of the extruded multilayered tube 200 according to the present invention. The invention is not restricted to the specific extruded multilayered tube 200 of the examples but encompasses other extruded multilayered tube 200 structures falling within the scope of the appended claims. The different layers of these examples of extruded multilayered tube 200 are described starting from the external layer, i.e., the intended outer surface uppermost, to the internal layer, i.e., the intended inner (product-contacting) surface lowermost.

### Example 1 :

This embodiment is schematically represented at figure 6. Said embodiment is constituted of:
- an outer layer 40 made of PE and having a thickness of 125 µm,
- a first tie layer 70 made of maleic anhydride grafted LLDPE and having a thickness of 10 µm,
- a first barrier layer 50 made of EVOH and having a thickness of 10 µm,
- a separating layer 60 made of a 70:30 mixture of HDPE and maleic anhydride grafted LLDPE and having a thickness of 60 µm,
- a second barrier layer 50 made of EVOH and having a thickness of 10 µm,
- a second tie layer 70 made of maleic anhydride grafted LLDPE and having a thickness of 10 µm,
- an inner layer 30 made of PE and having a thickness of 125 µm.

The extruded multilayered tube 200 has a total thickness of 350 µm.

The extruded multilayered tube 200 is obtained by extrusion.

The EVOH is the commercial EVOH Evasin^{®} grade 3251F with an ethylene content of 32 mol%.

### Example 2:

This embodiment is schematically represented at figure 6. Said embodiment is constituted of:
- an outer layer 40 made of PCR PE and PE mix and having a thickness of 115 µm,
- a first tie layer 70 made of PCR PE and tie-layer resin mix and having a thickness of 20 µm,
- a first barrier layer 50 made of EVOH and having a thickness of 10 µm,
- a separating layer 60 made of a mixture of PCR and maleic anhydride grafted LLDPE and having a thickness of 60 µm,
- a second barrier layer 50 made of EVOH and having a thickness of 10 µm,
- a second tie layer 70 made of PCR PE and tie-layer resin mix and having a thickness of 20 µm,
- an inner layer 30 made of PCR PE and PE mix and having a thickness of 115 µm.

The extruded multilayered tube 200 has a total thickness of 350 µm.

The extruded multilayered tube 200 is obtained by extrusion.

The EVOH is the commercial EVOH Evasin^{®} grade 3251F with an ethylene content of 32 mol%.

### Comparative example:

The extruded multilayered tube of the comparative example comprises only one barrier layer:
- an outer layer 40 made of PE and having a thickness of 145 µm,
- a first tie layer 60 made of maleic anhydride grafted LLDPE and having a thickness of 20 µm,
- a single barrier layer 54 made of EVOH and having a thickness of 20 µm,
- a second tie layer 60 made of maleic anhydride grafted LLDPE and having a thickness of 20 µm,
- an inner layer 30 made of PE and having a thickness of 145 µm.

The extruded multilayered tube has a total thickness of 350 µm.

The EVOH is the commercial EVOH Evasin^{®} grade 3251F with an ethylene content of 32 mol%.

The Oxygen transmission rate (OTR) has been measured for the example 1 according to the invention and for the comparative example.

The OTR is measured with oxygen permeation testing analyzer such as MOCON, the measure being notably realized according to the standard test method ASTM F1927. Lower values of OTR indicate lower permeability, and so a better protection from oxygen.

Although, the extruded multilayered tubes of the example 1 according to the invention and the comparative example have the same total thickness, the same total thickness of the barrier layers, and use the same EVOH (Evasin^{®} 3251F 32mol% of ethylene content), the extruded multilayered tubes 200 of the example 1 according to the invention show an OTR between 0,2 and 0,4 cm³/m².day (at 30 °C, 50% RH) and the extruded multilayered tube of the comparative example shows an OTR between 0,4 and 0,7 cm³/m².day (at 30 °C, 50% RH). This clearly shows that the use of two spaced barrier layers, in particular with a separating layer including HDPE, improves the permeability properties of the tube.

## Claims

1. A flexible tube container (1) comprising a tube head (10) and a skirt (100), the skirt being formed from an extruded multilayered tube (200), the extruded multilayered tube (200) comprising an inner layer (30) made of polyethylene, an outer layer (40) made of polyethylene and at least two barrier layers (50), the at least two barrier layers being spaced of at least 40 µm.

2. A flexible tube container (1) according to claim 1, wherein the extruded multilayered tube (200) is exempt from a longitudinal weld or joint or seam.

3. A flexible tube container (1) according to any of the preceding claims, wherein the at least two barrier layers (50) are spaced by at least one separating layer (60) comprising polyethylene.

4. A flexible tube container (1) according to the preceding claim, wherein the polyethylene of the separating layer is HDPE.

5. A flexible tube container (1) according to any of the claims 3 to 4, wherein the at least one separating layer (60) comprises tie-layer resin.

6. A flexible tube container (1) according to the preceding claim, wherein the tie-layer resin is an anhydride modified ethylene acrylate resin.

7. A flexible tube container (1) according to any of the claims 3 to 6, wherein the at least one separating layer (60) comprises a mixture of polyethylene and tie-layer resin.

8. A flexible tube container (1) according to the preceding claim, wherein the at least one separating layer (60) comprises between 60% and 95% of polyethylene.

9. A flexible tube container (1) according to any of the claims 7 to 8, wherein the at least one separating layer (60) comprises between 5% and 40% of tie-layer resin.

10. A flexible tube container (1) according to any of the preceding claims, wherein the at least two barrier layers (50) are made of EVOH with an ethylene content less than 32 mol%.

11. A flexible tube container (1) according to any of the preceding claims, wherein the total thickness of the extruded multilayered tube (200) is comprised between 250 and 500 µm.

12. A flexible tube container (1) according to any of the preceding claims in combination with claim 3, wherein the thickness of the separating layer is comprised between 40 and 130 µm.

13. A flexible tube container (1) according to any of the preceding claims, wherein the extruded multilayered tube (200) comprises tie layer (70) between the outer layer (40) and one of the at least two barrier layer (50) and/or between the inner layer (30) and one of the at least two the barrier layer (50).
